# FASCICULE DE BREVET EUROPEEN

(11) **EP 2 821 662 B1**
(45) Date de publication et mention de la délivrance du brevet: **05.06.2019**
(21) Numéro de dépôt: 14175078.6
(22) Date de dépôt: 30.06.2014
(51) Int. Cl.: F16C 33/78, B60B 27/00, F16J 15/3264, F16C 19/18

(54) **Ensemble de roulement et moyeu de roue pour véhicule motorisé avec dispositif d'étanchéité**
Radnaben-Wälzlageranordnung für ein Kraftfahrzeug mit einer Dichtungsvorrichtung
Wheel hub rolling bearing assembly for a motor vehicle with a sealing device

(30) Priorité: 01.07.2013 FR 1356371
(43) Date de publication de la demande: 07.01.2015
(73) Titulaire: NTN-SNR Roulements, 74000 Annecy (FR)
(72) Inventeur: Motot, Jean-Noël, 74330 Sevrier (FR)
(74) Mandataire: Sayettat, Julien Christian

(56) Documents cités:
- EP-A1- 0 424 185
- DE-U- 1 970 791
- GB-A- 2 089 906
- JP-A- 2005 233 287
- JP-A- 2005 291 485
- JP-A- 2006 010 055
- JP-A- 2007 315 527
- US-A- 2 773 366

## Description

L'invention concerne un palier à roulement comprenant un organe fixe, un organe tournant et des corps roulants disposés dans un espace de roulement formé entre lesdits organes pour permettre leur rotation relative autour d'un axe.

En particulier, l'invention s'applique aux paliers à roulement de véhicule automobile, notamment aux paliers de roue. De façon avantageuse, un palier suivant l'invention permet le montage d'une roue motrice ou non motrice de véhicule automobile, l'organe intérieur étant tournant et comprenant des moyens de fixation de la roue tandis que l'organe extérieur est fixe et comprend des moyens de fixation sur un élément du véhicule.

Pour empêcher d'une part les fuites de lubrifiant présent dans l'espace de roulement et d'autre part la contamination dudit espace avec des polluants extérieurs, au moins un côté de l'espace de roulement peut être équipé d'un dispositif d'étanchéité.

En particulier, le dispositif d'étanchéité comprend deux armatures rigides qui sont solidaires respectivement d'un organe en formant une chambre annulaire d'étanchéité dans laquelle un élément d'étanchéité dynamique est disposé, ledit élément étant solidaire d'une armature et présentant au moins une lèvre disposée dans ladite chambre en étant en contact frottant sur l'autre armature.

Un palier à roulement avec les caractéristiques de la préambule de la revendication 1 est connu du document JP 2005 291 485 A.

Pour satisfaire aux cahiers des charges de plus en plus sévères relativement à l'étanchéité, notamment pour la validation des paliers de roue par les constructeurs automobiles, cette solution conduit à un couple de frottement important qui, outre l'impact négatif sur l'énergie nécessaire à la rotation du palier, provoque un niveau de température de fonctionnement élevé et donc une usure prématurée de la lèvre frottante. En outre, cette usure est d'autant plus rapide que des polluants peuvent rentrer dans la chambre d'étanchéité au niveau de la zone de frottement et y demeurer lors de la rotation.

Pour tenter de résoudre ce problème, on peut proposer d'ajouter des déflecteurs pour former une chicane d'entrée dans la chambre d'étanchéité, limitant ainsi les échanges entre ladite chambre et l'extérieur, notamment au niveau de la zone de frottement. Toutefois, cette solution, outre le coût supplémentaire du déflecteur et de son montage dans le palier, présente un encombrement qui peut impacter négativement sur les performances mécaniques du palier en nécessitant une modification structurelle de celui-ci.

L'invention a pour but de perfectionner l'art antérieur en proposant un palier à roulement équipé d'un dispositif d'étanchéité dont les performances d'étanchéité sont optimisées par rapport au couple de frottement induit, tout en limitant l'impact de son intégration dans la géométrie dudit palier.

A cet effet, l'invention propose un palier à roulement comprenant un organe fixe, un organe tournant et des corps roulants disposés dans un espace de roulement formé entre lesdits organes pour permettre leur rotation relative autour d'un axe, au moins un côté de l'espace de roulement présentant une ouverture annulaire qui est formée entre deux bords s'étendant respectivement sur un organe, chacun desdits bords étant entouré par une paroi extérieure s'étendant axialement sur l'organe correspondant, ladite ouverture étant équipée d'un dispositif d'étanchéité comprenant deux armatures rigides solidaires respectivement d'un organe en formant une chambre annulaire d'étanchéité dans laquelle un élément d'étanchéité dynamique est disposé, chacune desdites armatures présentant une portée extérieure axiale qui est associée sur la paroi extérieure de l'organe correspondant et une portée intérieure axiale disposée dans l'ouverture, lesdites portées intérieures axiales étant disposées en regard radial pour former la chambre d'étanchéité entre une couronne amont et une couronne aval comprenant respectivement l'une desdites portées intérieures axiales, au moins une desdites portées intérieures axiales étant équipée de l'élément d'étanchéité dynamique qui présente au moins une lèvre disposée dans ladite chambre d'étanchéité en étant en contact frottant sur l'autre portée intérieure axiale.

D'autres objets et avantages de l'invention apparaîtront dans la description qui suit, faite en référence aux figures annexées, dans lesquelles :
- la figure 1 représente, en coupe longitudinale, un palier à roulement selon un mode de réalisation de l'invention ;
- la figure 2 est un agrandissement de la figure 1 montrant plus particulièrement le dispositif d'étanchéité, la figure 2a étant une vue analogue à la figure 2 montrant une variante de réalisation du dispositif d'étanchéité.

En relation avec ces figures, on décrit ci-dessous un mode de réalisation d'un palier à roulement, en particulier pour le montage d'une roue motrice ou non motrice d'un véhicule automobile.

Le palier comprend un organe extérieur fixe 1 comprenant une bride 2 pourvue de trous de fixation (non représentés) agencés pour permettre la fixation du palier par vissage ou boulonnage, par exemple sur un élément de suspension du véhicule automobile. Le palier comprend également un organe intérieur tournant 3 qui comprend une bride 4 pourvue de trous 5 de fixation par vissage de la roue. De façon générale, au moins un organe 1, 3 d'un palier selon l'invention peut comprendre des moyens de fixation à respectivement une structure fixe ou un ensemble tournant.

Entre ces deux organes 1, 3, un espace de roulement 6 est formé pour permettre la rotation relative desdits organes autour d'un axe A. Dans cette description, les termes de positionnement dans l'espace sont pris en référence à l'axe A de rotation du palier. En particulier, le terme « intérieur » est relatif à une disposition proche de cet axe A et le terme « extérieur » est relatif à une disposition à distance de cet axe A.

Pour permettre la rotation, chaque organe 1, 3 présente deux pistes de roulement espacées axialement de sorte à former entre lesdits organes deux chemins de roulement présentant un entraxe et dans lesquels sont disposées respectivement une rangée de corps roulants 7 sous la forme de billes qui sont maintenues par une cage.

Sur les figures, l'organe intérieur 3 comprend un corps et une bague rapportée 8 qui est emmanchée sur la surface extérieure dudit corps, une piste de roulement étant réalisée sur ladite bague et l'autre piste de roulement étant réalisée sur le corps. Toutefois, l'invention n'est pas limitée à ce mode de réalisation du palier, en particulier relativement à la présence des brides 2, 4, à la réalisation des chemins de roulement, à la géométrie des corps roulants 7, à la géométrie et/ou à la disposition relative des organes fixe 1 et tournant 3.

L'espace de roulement 6 débouche à l'extérieur par l'intermédiaire de deux ouvertures annulaires 9 qui sont formées entre les organes 1, 3 de part et d'autre des pistes de roulement. Plus précisément, l'ouverture 9 du côté opposé à la bride 4 est formée entre un bord intérieur d'une extension axiale 10 de l'organe extérieur 1 et un bord extérieur s'étendant axialement sur la bague rapportée 8.

L'ouverture annulaire 9 adjacente à la bride 4 est également formée entre deux bords 11, 12 s'étendant respectivement sur un organe 1, 3. En particulier, les bords 11, 12 s'étendent radialement sur l'organe 1, 3 correspondant, lesdits bords étant disposés en regard axial pour former entre eux l'ouverture annulaire 9. En outre, chacun des bords 11, 12 est entouré par une paroi extérieure 13, 14 qui s'étend axialement sur l'organe correspondant 1, 3, notamment le long de la surface extérieure libre respectivement d'un organe 1, 3.

Chacune des parois extérieures 13, 14 est adjacente au bord 11, 12 correspondant pour former une section coudée en L renversé, l'ouverture annulaire 9 débouchant extérieurement desdits bords au niveau desdites parois extérieures. Dans le mode de réalisation représenté, les parois extérieures 13, 14 présentent un diamètre différent, mais il pourrait être identique.

Pour empêcher d'une part les fuites de lubrifiant présent dans l'espace de roulement 6 et d'autre part la contamination dudit espace avec des polluants extérieurs, notamment à base de boues, au moins une ouverture annulaire 9 est équipée d'un dispositif d'étanchéité. Dans le mode de réalisation représenté, les deux ouvertures 9 de l'espace de roulement 6 sont équipées d'un dispositif d'étanchéité qui est interposé entre les organes 1, 3.

Chacun des dispositifs d'étanchéité comprend deux armatures rigides 15, 16 solidaires respectivement d'un organe 1, 3 en formant une chambre annulaire d'étanchéité 17 dans laquelle un élément d'étanchéité dynamique 18 est disposé. En particulier, les armatures 15, 16 peuvent être réalisées en matériau métallique, notamment en tôle emboutie.

On décrit ci-dessous le dispositif d'étanchéité placé du côté de la bride 4, l'autre dispositif n'étant pas spécifique à l'invention et pouvant être réalisé suivant l'art antérieur. En variante, chaque côté de l'espace de roulement 6 peut être équipé du dispositif d'étanchéité décrit ci-dessous.

Chacune des armatures 15, 16 présente une portée extérieure axiale 15a, 16a qui est associée, notamment par emmanchement axial, sur la paroi extérieure 13, 14 de l'organe 1, 3 correspondant et une portée intérieure axiale 15b, 16b disposée dans l'ouverture 9. Dans le mode de réalisation représenté, chaque armature 15, 16 présente une portée intermédiaire 15c, 16c qui relie les portées extérieure 15a, 16a et intérieure 15b, 16b, ladite portée intermédiaire étant disposée contre le bord 11, 12 de l'organe 1, 3 correspondant. En particulier, la portée intermédiaire 15c, 16c s'étend alors radialement le long du bord 11, 12 en étant en appui axial sur ledit bord, formant notamment butée de fin d'emmanchement de l'armature 15, 16 sur l'organe 1, 3.

Les portées intérieures axiales 15b, 16b sont disposées en regard radial pour former la chambre d'étanchéité 17 entre une couronne amont 19 et une couronne aval 20 comprenant respectivement l'une desdites portées intérieures axiales. Dans la description, les termes amont et aval sont définis par rapport au sens d'introduction des polluants dans l'ouverture annulaire 9, la couronne amont 19 représentée étant disposée extérieurement en entourant la couronne aval 20.

En particulier, comme représenté sur les figures, la compacité radiale du palier peut être améliorée en prévoyant que le diamètre de la portée intérieure 15b, 16b appartenant à la couronne amont 19 soit sensiblement égal au diamètre de la portée extérieure 16a, 15a de l'armature 15, 16 portant la couronne aval 20.

Au moins une des portées intérieures axiales 15b, 16b est équipée de l'élément d'étanchéité dynamique 18 qui présente au moins une lèvre 21 disposée dans la chambre d'étanchéité 17 en étant en contact frottant sur l'autre portée intérieure axiale 16b, 15b. Ainsi, l'encombrement axial du dispositif d'étanchéité est limité en prévoyant un recouvrement axial entre les portées axiales intérieures 15b, 16b entre lesquelles l'étanchéité est réalisée, afin de limiter l'impact de l'intégration dudit dispositif dans le palier.

En particulier, la compacité axiale du dispositif d'étanchéité permet de ne pas avoir à réduire l'entraxe des pistes de roulements, ce qui aurait pour conséquence de limiter la capacité de charge dudit palier, et/ou la dimension de la paroi 13, 14 d'association des armatures 15, 16, ce qui irait à l'encontre de la fiabilité de l'étanchéité recherchée.

De façon avantageuse, la lèvre 21 s'étend essentiellement radialement dans la chambre d'étanchéité 17 pour être en contact frottant radial sur la portée intérieure axiale 15b, 16b. En outre, l'étanchéité est améliorée en prévoyant que l'élément d'étanchéité dynamique 18 présente deux lèvres 21 qui sont espacées axialement en étant chacune en contact frottant sur la portée intérieure axiale 15b, 16b. Par ailleurs, les figures montrent un élément d'étanchéité dynamique 18 présentant une lèvre annexe 22 qui est en contact frottant sur un bord 11, 12.

Les armatures 15, 16 forment entre elles un passage 23 de communication entre la chambre d'étanchéité 17 et l'extérieur, la géométrie dudit passage étant agencée pour limiter l'introduction de polluants dans ladite chambre afin, sans induire de couple supplémentaire, de contribuer à la fiabilité de l'étanchéité conférée, notamment au niveau de la zone de frottement des lèvres 21. En particulier, la dimension du passage 23 peut être réduite et/ou sa section courbée pour former une chicane d'entrée dans la chambre d'étanchéité 17.

Dans le mode de réalisation représenté, le passage 23 est formé entre une armature 15, 16 et l'extrémité libre de la couronne amont 19 appartenant à l'autre armature 16, 15, plus précisément entre un rebord libre 24 de ladite couronne et la zone de jonction entre les portées extérieure 15a, 16a et intermédiaire 15c, 16c de l'autre armature 15, 16. Ainsi, la zone de frottement n'est pas disposée en regard radial du passage 23 ce qui, en évitant que les polluants ne puissent tomber directement au niveau de cette zone, permet de limiter l'usure de la lèvre 21. En particulier, il est alors possible de mieux maîtriser l'interférence entre la lèvre 21 et la portée intérieure 15b, 16b sur laquelle elle frotte, afin notamment de pouvoir optimiser le couple de frottement nécessaire à la fiabilisation dans le temps de l'étanchéité.

En outre, le rebord libre 24 entoure la portée intérieure axiale 15b, 16b, ledit rebord étant relevé extérieurement par rapport à ladite portée pour former une zone de rétention axiale sur ladite portée. Ainsi, les polluants projetés sur la couronne amont 19 sont retenus en limitant leur introduction dans la chambre d'étanchéité 17 au travers du passage 23, puis éliminés par gravité et/ou centrifugation afin d'éviter leur accumulation sur le dispositif d'étanchéité.

En relation avec les figures, l'élément d'étanchéité dynamique 18 est solidaire de la portée intérieure axiale 15b, 16b appartenant à la couronne aval 20, le contact frottant étant réalisé par appui radial extérieur sur l'intérieur de la portée intérieure axiale 16b, 15b de la couronne amont 19.

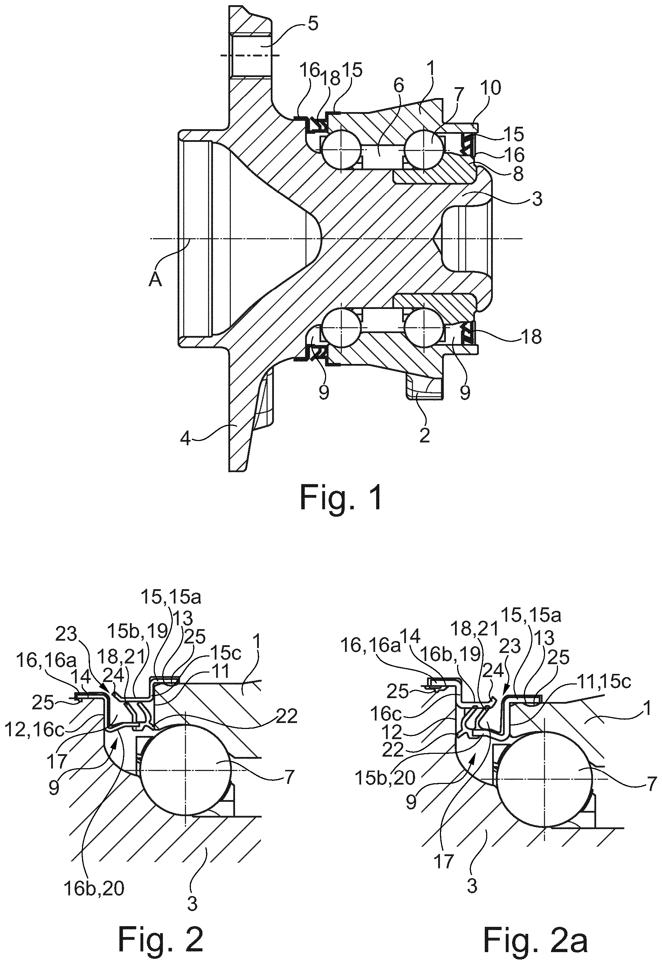

Sur la figure 2, la couronne aval 20 est tournante, la paroi extérieure 13 de l'organe fixe 1 présentant un diamètre supérieur à celui de la paroi extérieure 14 de l'organe tournant 3 afin de pouvoir disposer la couronne amont 19 dans le prolongement axial de la portée extérieure axiale 16a en formant un jeu axial entre elles au travers duquel le passage 23 est formé.

Par ailleurs, la couronne aval 20 représentée est reliée à la portée intermédiaire 15c, 16c par l'intermédiaire d'une portion légèrement inclinée extérieurement, la portée intérieure axiale 15b, 16b prolongeant ladite portion. La portée intérieure axiale 15b, 16b de la couronne amont 19 est directement reliée à la portée intermédiaire 15c, 16c en étant entourée du rebord annulaire 24.

Sur la figure 2a l'armature 15 portant la couronne aval 20 est solidarisée à l'organe fixe 1, la couronne amont 19 étant associée à l'organe intérieur 3 pour tourner autour de l'élément d'étanchéité 18. Dans cette réalisation, le passage 23 est formé de façon analogue à la figure 2 en prévoyant une paroi extérieure tournante 14 dont le diamètre est supérieur à celui de la paroi extérieure fixe 13.

En variante, l'appui d'étanchéité peut être radial vers l'intérieur en prévoyant que l'élément d'étanchéité dynamique 18 soit solidaire de la couronne amont 19 pour venir frotter sur l'extérieur de la portée intérieure axiale 15b, 16b appartenant à la couronne aval 20.

Selon une réalisation avantageuse, l'élément d'étanchéité 18 est associé par surmoulage à l'armature 15, 16. En particulier, l'élément d'étanchéité 18 peut être réalisé en matériau souple, par exemple en élastomère, notamment à base de copolymère butadiène nitrile (NBR), éventuellement renforcé mécaniquement par des charges telles que du noir de carbone, de NBR hydrogéné (HNBR), de fluoropolymère ou de polyacrylate.

Par ailleurs, le palier peut comprendre au moins un élément d'étanchéité statique 25 qui est monté entre une portée extérieure axiale 15a, 16a et la paroi extérieure 13, 14 sur laquelle elle est associée afin d'empêcher l'introduction de polluants entre l'armature 15, 16 et ladite paroi. De façon avantageuse, l'élément d'étanchéité dynamique 18 présente une extension qui est interposée dans l'emmanchement pour former l'étanchéité statique.

## Revendications

1. Palier à roulement comprenant un organe fixe (1), un organe tournant (3) et des corps roulants (7) disposés dans un espace de roulement (6) formé entre lesdits organes (1, 3) pour permettre leur rotation relative autour d'un axe (A), au moins un côté de l'espace de roulement (6) présentant une ouverture annulaire (9) qui est formée entre deux bords (11, 12) s'étendant respectivement sur un organe (1, 3), chacun desdits bords (11, 12) étant entouré par une paroi extérieure (13, 14) s'étendant axialement sur l'organe (1, 3) correspondant, ladite ouverture (9) étant équipée d'un dispositif d'étanchéité comprenant deux armatures rigides (15, 16) solidaires respectivement d'un organe (1, 3) en formant une chambre annulaire d'étanchéité (17) dans laquelle un élément d'étanchéité dynamique (18) est disposé, chacune desdites armatures présentant une portée extérieure axiale (15a, 16a) qui est associée sur la paroi extérieure (13, 14) de l'organe (1, 3) correspondant, ledit palier étant **caractérisé en ce que** chacune desdites armatures (15, 16) présente une portée intérieure axiale (15b, 16b) disposée dans l'ouverture (9), lesdites portées intérieures axiales (15b, 16b) étant disposées en regard radial pour former la chambre d'étanchéité (17) entre une couronne amont (19) et une couronne aval (20) comprenant respectivement l'une desdites portées intérieures axiales (15b, 16b), au moins une desdites portées intérieures axiales (15b, 16b) étant équipée de l'élément d'étanchéité dynamique (18) qui présente au moins une lèvre (21) disposée dans ladite chambre d'étanchéité (17) en étant en contact frottant sur l'autre portée intérieure axiale (16b, 15b).

2. Palier à roulement selon la revendication 1, **caractérisé en ce que** les bords (11, 12) s'étendent radialement sur l'organe (1, 3) correspondant, lesdits bords (11, 12) étant disposés en regard axial pour former entre eux l'ouverture annulaire (9).

3. Palier à roulement selon l'une des revendications 1 ou 2, **caractérisé en ce que** chaque armature (15, 16) présente une portée intermédiaire (15c, 16c) qui relie les portées extérieure (15a, 16a) et intérieure (15b, 16b), ladite portée intermédiaire (15c, 16c) étant disposée contre le bord (11, 12) de l'organe (1, 3) correspondant.

4. Palier à roulement selon l'une quelconque des revendications 1 à 3, **caractérisé en ce que** les armatures (15, 16) forment entre elles un passage (23) de communication entre la chambre d'étanchéité (17) et l'extérieur, la géométrie dudit passage (23) étant agencée pour limiter l'introduction de polluants dans ladite chambre.

5. Palier à roulement selon la revendication 4, **caractérisé en ce que** le passage (23) est formé entre une armature (15, 16) et l'extrémité libre de la couronne amont (19) appartenant à l'autre armature (16, 15).

6. Palier à roulement selon l'une quelconque des revendications 1 à 5, **caractérisé en ce que** la couronne amont (19) présente un rebord libre (24) qui entoure la portée intérieure axiale (15b, 16b), ledit rebord (24) étant relevé extérieurement par rapport à ladite portée intérieure axiale (15b, 16b) pour former une zone de rétention axiale sur ladite portée intérieure axiale (15b, 16b).

7. Palier à roulement selon l'une quelconque des revendications 1 à 6, **caractérisé en ce que** la lèvre (21) s'étend essentiellement radialement dans la chambre d'étanchéité (17) pour être en contact frottant radial sur la portée intérieure axiale (15b, 16b).

8. Palier à roulement selon l'une quelconque des revendications 1 à 7, **caractérisé en ce que** l'élément d'étanchéité dynamique (18) présente deux lèvres (21) qui sont espacées axialement en étant chacune en contact frottant sur une portée intérieure axiale (15b, 16b).

9. Palier à roulement selon l'une quelconque des revendications 1 à 8, **caractérisé en ce que** l'élément d'étanchéité dynamique (18) présente une lèvre annexe (22) qui est en contact frottant sur un bord (11, 12).

10. Palier à roulement selon l'une quelconque des revendications 1 à 9, **caractérisé en ce que** l'élément d'étanchéité dynamique (18) est solidaire de la portée intérieure axiale (15b, 16b) appartenant à la couronne aval (20).

11. Palier à roulement selon l'une quelconque des revendications 1 à 10, **caractérisé en ce qu'**il comprend au moins un élément d'étanchéité statique (25) qui est monté entre une portée extérieure axiale (15a, 16a) et la paroi extérieure (13, 14) sur laquelle elle est associée.

12. Palier à roulement selon l'une quelconque des revendications 1 à 11, **caractérisé en ce qu'**au moins un organe (1, 3) comprend des moyens de fixation (5) à respectivement une structure fixe et un ensemble tournant.

## Patentansprüche

1. Wälzlager, ein feststehendes Organ (1), ein drehendes Organ (3) und Rollkörper (7) umfassend, die in einem Lagerraum (6) angeordnet sind, der zwischen den Organen (1, 3) gebildet wird, um deren Drehung zueinander um eine Achse (A) zu erlauben, wobei mindestens eine Seite des Lagerraumes (6) eine ringförmige Öffnung (9) aufweist, die zwischen zwei Rändern (11, 12) gebildet wird, die sich jeweils auf einem Organ (1, 3) erstrecken, wobei jeder der Ränder (11, 12) von einer Außenwand (13, 14) umgeben ist, die sich axial auf dem entsprechenden Organ (1, 3) erstreckt, wobei die Öffnung (9) mit einer Dichtungsvorrichtung ausgestattet ist, die zwei starre Armaturen (15, 16) umfasst, die jeweils fest mit einem Organ (1, 3) verbunden sind, indem sie eine ringförmige Dichtungskammer (17) bilden, in der ein dynamisches Dichtungselement (18) angeordnet ist, wobei jede der Armaturen eine axiale Außenauflagefläche (15a, 16a) aufweist, die auf der Außenwand (13, 14) des entsprechenden Organs (1, 3) assoziiert ist, wobei das Wälzlager **dadurch gekennzeichnet ist, dass** jede der Armaturen (15, 16) eine axiale Innenauflagefläche (15b, 16b) aufweist, die in der Öffnung (9) angeordnet ist, wobei die axialen Innenauflageflächen (15b, 16b) radial zugewandt angeordnet sind, um die Dichtungskammer (17) zwischen einem stromaufwärtigen Kranz (19) und einem stromabwärtigen Kranz (20) zu bilden, die jeweils die eine der axialen Innenauflageflächen (15b, 16b) umfassen, wobei mindestens eine der axialen Innenauflageflächen (15b, 16b) mit dem dynamischen Dichtungselement (18) ausgestattet ist, das mindestens eine Lippe (21) aufweist, die in der Dichtungskammer (17) angeordnet ist, indem sie in Reibkontakt auf der anderen axialen Innenauflagefläche (16b, 15b) ist.

2. Wälzlager nach Anspruch 1, **dadurch gekennzeichnet, dass** sich die Ränder (11, 12) radial auf dem entsprechenden Organ (1, 3) erstrecken, wobei die Ränder (11, 12) axial zugewandt angeordnet sind, um zwischen sich die ringförmige Öffnung (9) zu bilden.

3. Wälzlager nach einem der Ansprüche 1 oder 2, **dadurch gekennzeichnet, dass** jede Armatur (15, 16) eine Zwischenauflagefläche (15c, 16c) aufweist, die die äußere (15a, 16a) und die innere (15b, 16b) Auflagefläche verbindet, wobei die Zwischenauflagefläche (15c, 16c) an dem Rand (11, 12) des entsprechenden Organs (1, 3) angeordnet ist.

4. Wälzlager nach einem der Ansprüche 1 bis 3, **dadurch gekennzeichnet, dass** die Armaturen (15, 16) zwischen sich einen Kommunikationsdurchgang (23) zwischen der Dichtungskammer (17) und dem Äußeren bilden, wobei die Geometrie des Durchgangs (23) eingerichtet ist, um das Einführen von Schmutzstoffen in die Kammer zu beschränken.

5. Wälzlager nach Anspruch 4, **dadurch gekennzeichnet, dass** der Durchgang (23) zwischen einer Armatur (15, 16) und dem freien Ende des stromaufwärtigen Kranzes (19) gebildet wird, der der anderen Armatur (16, 15) angehört.

6. Wälzlager nach einem der Ansprüche 1 bis 5, **dadurch gekennzeichnet, dass** der stromaufwärtige Kranz (19) eine freie Kante (24) aufweist, die die axiale Innenauflagefläche (15b, 16b) umgibt, wobei die Kante (24) äußerlich im Verhältnis zu der axialen Innenauflagefläche (15b, 16b) erhöht ist, um eine axiale Rückhaltezone auf der axialen Innenauflagefläche (15b, 16b) zu bilden.

7. Wälzlager nach einem der Ansprüche 1 bis 6, **dadurch gekennzeichnet, dass** sich die Lippe (21) im Wesentlichen radial in der Dichtungskammer (17) erstreckt, um in radialem Reibkontakt auf der axialen Innenauflagefläche (15b, 16b) zu sein.

8. Wälzlager nach einem der Ansprüche 1 bis 7, **dadurch gekennzeichnet, dass** das dynamische Dichtungselement (18) zwei Lippen (21) aufweist, die axial beabstandet sind, indem jede in Reibkontakt auf einer axialen Innenauflagefläche (15b, 16b) ist.

9. Wälzlager nach einem der Ansprüche 1 bis 8, **dadurch gekennzeichnet, dass** das dynamische Dichtungselement (18) eine Nebenlippe (22) aufweist, die in Reibkontakt auf einem Rand (11, 12) ist.

10. Wälzlager nach einem der Ansprüche 1 bis 9, **dadurch gekennzeichnet, dass** das dynamische Dichtungselement (18) fest mit der axialen Innenauflagefläche (15b, 16b) verbunden ist, die dem stromabwärtigen Kranz (20) angehört.

11. Wälzlager nach einem der Ansprüche 1 bis 10, **dadurch gekennzeichnet, dass** es mindestens ein statisches Dichtungselement (25) umfasst, das zwischen einer axialen Außenauflagefläche (15a, 16a) und der Außenwand (13, 14), auf der sie assoziiert ist, montiert ist.

12. Wälzlager nach einem der Ansprüche 1 bis 11, **dadurch gekennzeichnet, dass** mindestens ein Organ (1, 3) Befestigungsmittel (5) mit jeweils einer feststehenden Struktur und einer Dreheinheit umfasst.

## Claims

1. Rolling bearing comprising a fixed member (1), a rotating member (3) and rolling bodies (7) disposed in a rolling space (6) formed between said members (1, 3) to allow relative rotation thereof about an axis (A), at least one side of the rolling space (6) having an annular opening (9) that is formed between two edges (11, 12) extending respectively over a member (1, 3), each of said edges (11, 12) being surrounded by an external wall (13, 14) extending axially over the corresponding member (1, 3), said opening (9) being equipped with a sealing device comprising two rigid frames (15, 16) secured respectively to a member (1, 3) while forming an annular sealing chamber (17) in which a dynamic sealing element (18) is disposed, each of said frames having an axial external surface (15a, 16a) that is associated on the external wall (13, 14) of the corresponding member (1, 3), said bearing being **characterised in that** each of said frames (15, 16) has an axial internal surface (15b, 16b) disposed in the opening (9), said axial internal surfaces (15b, 16b) being disposed radially opposite in order to form the sealing chamber (17) between an upstream ring (19) and a downstream ring (20) comprising respectively of said axial internal surfaces (15b, 16b), at least one of said axial internal surfaces (15b, 16b) being equipped with the dynamic sealing element (18), which has at least one lip (21) disposed in said sealing chamber (17) while being in rubbing contact on the other axial internal surface (16b, 15b).

2. Rolling bearing according to claim 1, **characterised in that** the edges (11, 12) extend radially over the corresponding member (1, 3), said edges (11, 12) being disposed axially opposite so as to form between them the annular opening (9).

3. Rolling bearing according to either claim 1 or claim 2, **characterised in that** each frame (15, 16) has an intermediate surface (15c, 16c) that connects the external (15a, 16a) and internal (15b, 16b) surfaces, said intermediate surface (15c, 16c) being disposed against the edge (11, 12) of the corresponding member (1, 3).

4. Rolling bearing according to any of claims 1 to 3, **characterised in that** frames (15, 16) form between them a passage (23) for communication between the sealing chamber (17) and the outside, the geometry of said passage (23) being arranged so as to limit the introduction of pollutants into said chamber.

5. Rolling bearing according to claim 4, **characterised in that** the passage (23) is formed between a frame (15, 16) and the free end of the upstream ring (19) belonging to the other frame (16, 15).

6. Rolling bearing according to any of claims 1 to 5, **characterised in that** the upstream ring (19) has a free rim (24) that surrounds the axial internal surface (15b, 16b), said rim (24) being raised externally with respect to said axial internal surface (15b, 16b) in order to form an axial retention zone on said axial internal surface (15b, 16b).

7. Bearing according to any of claims 1 to 6, **characterised in that** the lip (21) extends essentially radially in the sealing chamber (17) so as to be in radial rubbing contact on the axial internal surface (15b, 16b).

8. Rolling bearing according to any of claims 1 to 7, **characterised in that** the dynamic sealing element (18) has two lips (21) that are spaces apart axially while each being in rubbing contact on an axial internal surface (15b, 16b) .

9. Rolling bearing according to any of claims 1 to 8, **characterised in that** the dynamic sealing element (18) has a related lip (22) that is in rubbing contact on an edge (11, 12).

10. Rolling bearing according to any of claims 1 to 9, **characterised in that** the dynamic sealing element (18) is secured to the axial internal surface (15b, 16) belonging to the downstream ring (20).

11. Rolling bearing according to any of claims 1 to 10, **characterised in that** it comprises at least one static sealing element (25) that is mounted between an axial external surface (15a, 16a) and the external wall (13, 14) with which it is associated.

12. Rolling bearing according to any of claims 1 to 11, **characterised in that** at least one member (1, 3) comprises means (5) for fixing to respectively a fixed structure and a rotating assembly.
